(19) Europäisches Patentamt
European Patent Office
Office européen des brevets

(11) **EP 2 236 537 A2**

(12) **EUROPÄISCHE PATENTANMELDUNG**

(43) Veröffentlichungstag:
**06.10.2010 Patentblatt 2010/40**

(51) Int Cl.:
***C08G 18/66*** (2006.01)   ***C08G 18/42*** (2006.01)
***C08G 18/32*** (2006.01)

(21) Anmeldenummer: **10001477.8**

(22) Anmeldetag: **12.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **01.04.2009   DE 102009016632**

(71) Anmelder: **Astrium GmbH**
**82024 Taufkirchen (DE)**

(72) Erfinder:
• **Krüger, Jörg**
**28844 Weyhe (DE)**

• **Müller, Mark**
**28359 Bremen (DE)**
• **Yakushin, Vladimir**
**1050 Riga (LV)**
• **Cabulis, Ugis**
**1084 Riga (LV)**
• **Stirna, Uldis**
**1082 Riga (LV)**

(74) Vertreter: **Hansmann, Dierk et al**
**Patentanwälte**
**Hansmann-Klickow-Hansmann**
**Jessenstrasse 4**
**22767 Hamburg (DE)**

(54) **Polyurethanschaum zur thermalen Isolation bei Tiefsttemperaturen**

(57)   Bei einem Polyurethanschaum zur thermalen Isolation bei Tiefsttemperaturen, der durch eine Reaktion von Polyisocyanat und Polyolen, die mindestens zwei aktive Wasserstoffatome enthalten, einem Kettenverlängerer, einem Treibmittel, einem Schaumstabilisator und Katalysatoren hergestellt ist, beträgt der Anteil von Urethan, Ester und aromatischen Ringen in der Polymermatrix des Polyurethanschaumes zwischen 70 und 85 Gewichtsprozent und das Molekulargewicht pro Verzweigungseinheit liegt zwischen 500 und 700. Ferner sind die folgenden Inhaltsstoffe vorgesehen:
- Polyether-Polyol, das durch Polyaddition von Propylenoxid und Ethylenoxid zu Sorbit oder Saccharose hergestellt wird;
- Kettenverlängerer, beispielsweise $C_4$- bis $C_6$-Alkandiole oder auch Diethylenglycol oder Dipropylenglycol oder ein N-substituiertes Diethanolamin, N-Methyldiethanolamin, N-Ethyldiethanolamin oder N-Phenyldiethanolamin;
- Polyester-Polyole mit aromatischer Struktur.

Zur inneren Isolierung von Tanks zur Lagerung von kryogenen Flüssigkeiten wird dieser Polyurethanschaum sowohl für die Isolierung von verstärkten als auch von nicht verstärkten ebenen oder gekrümmten Strukturen mittels Gieß- oder Sprühtechniken aufgebracht. Der Polyurethanschaum kann außerdem mit einer Tieftemperatur-Epoxid-Auskleidung oder mit einer Grundierung auf Epoxidbasis zur Verbesserung der Haftfestigkeit kombiniert werden.

EP 2 236 537 A2

## Beschreibung

Die Erfindung bezieht sich auf einen Polyurethanschaum zur thermalen Isolation bei Tiefsttemperaturen, hergestellt durch eine Reaktion von Polyisocyanat und Polyolen, die mindestens zwei aktive Wasserstoffatome enthalten, einem Kettenverlängerer, einem Treibmittel, einem Schaumstabilisator und Katalysatoren. Ferner bezieht sie sich auf eine Verwendung eines derartigen Polyurethanschaums.

Für die Lagerung von verflüssigten Gasen, wie Methan, Erdgas (LNG) und insbesondere von flüssigem Wasserstoff (LH$_2$) und deren Transport ist eine effiziente thermische Isolierung in unterschiedlich konstruierten Tanks und Gefäßen erforderlich. Am häufigsten werden Polyurethanschäume (PUR-Schäume) oder auch Polyisocyanuratschäume (PIR-Schäume) für die thermische Isolierung von Flüssiggas-Tanks verwendet. Generell sind zwei verschiedene Verfahren zum Isolieren von Flüssiggas-Tanks bekannt. Bei dem ersten wird das isolierende Material auf die Außenwand des Tanks aufgetragen, bei dem zweiten wird dieses statt dessen auf die Innenwand aufgetragen. In beiden Fällen treten im Isolierungsmaterial thermische Belastungen auf, sobald der Tank mit dem Flüssiggas befüllt wird. Der Grund für diese thermischen Belastungen beim Befüllen und Entleeren der Tanks liegt in der Tatsache, daß die thermischen Ausdehnungskoeffizienten des Isoliermaterials und des Wandmaterials des Tanks, letzteres zumeist ein Metall, unterschiedlich sind. Die daraus resultierenden thermischen Spannungen können somit Verformungen des wärmeisolierenden Materials verursachen, die wiederum zur Bildung von Rissen führen.

Darüber hinaus werden die Kryoflüssigkeiten oft bei Drücken, die über dem atmosphärischen Umgebungsdruck liegen, transportiert bzw. gelagert. Zusätzlich werden bei derartigen Tanks oft Dichtigkeitsprüfungen, sogenannte Proof-Tests, unter Umgebungsbedingungen durchgeführt, wobei typische Werte für weltraumanwendungen bei 4 bis 8 bar liegen. Daher muß die Tieftemperatur-Innenisolierung zusätzlich zu einer hohen Beständigkeit gegenüber thermischen Spannungen im Tieftemperaturbereich auch eine hohe Druckfestigkeit aufweisen, sowohl bei tiefen Temperaturen als auch bei Umgebungstemperaturen.

Bei Anwendungen in der Raumfahrt wird in der Regel bei den derzeitigen Hochleistungstriebwerken LH2 als Treibstoff benutzt, der in großen (meist metallischen) Tanks mitgeführt werden muss. Hierbei treten Belastungen in anspruchsvoller Kombination auf, die besondere Eigenschaften einer Isolation beziehungsweise eines Isolationsmaterials erfordern. Hierzu gehören eine hohe Druckfestigkeit sowohl bei Raumtemperatur, beispielsweise bei Abnahmetests als auch bei Tieftemperaturen sowie gleichzeitig ein hoher Widerstand gegen thermische Dehnungen (charakterisiert durch das Verhältnis Bruchdehnung zu thermischer Verformung $\varepsilon77 / \Delta1296$-77) zur Vermeidung von Rissbildung, d.h.

dem Verlust der Isolationswirkung und der Generierung von Partikelverschmutzungen im Treibstoff). Zugleich ist eine hohe Isolationswirkung mit niedriger Wärmeleitfähigkeit $\lambda$ bei einem Minimum an Masse beziehungsweise an Dichte gefordert.

Eine solche Eigenschaftskombination ist bei den derzeit bekannten Technologien nicht zu finden. Zwar gilt generell, dass im Gegensatz zu herkömmlichen Polyurethanschäumen die thermischen Zugspannungen in Polyurethanschäumen, die speziell für eine Verwendung als Tieftemperatur-Isolierung konzipiert sind, bei tiefen Temperaturen bedeutend niedriger sind als ihre Zug- oder Zerreißfestigkeit bei einer Temperatur von 77 K oder 20 K. Daher ist es auch wenig wahrscheinlich, daß es in diesen Materialien unter Betriebsbedingungen zu Verformungen kommt, die zur Bildung von Rissen im Schaumstoff führen könnten. Dies ist auf die Tatsache zurückzuführen, daß diese Materialien bei einer Temperatur von 77 oder 20 K eine höhere Zerreißfestigkeit $\sigma t$ und eine höhere Bruchdehnung $\varepsilon$ als herkömmliche PUR-Schäume aufweisen.

Allerdings ist bei PUR-Schäumen, die speziell für die Anwendung als Tieftemperatur-Außenisolierung konzipiert sind, die Druckfestigkeit $\sigma c$ generell nicht ausreichend, um sie auch als Tieftemperatur-Inneisolierung in Tanks verwenden zu können. Aus diesem Grund erfüllen die bekannten PUR- oder PIR-Schäume, die bereits zur Verwendung als externe Tieftemperatur-Isolierung vorgeschlagen worden sind, in der Regel nicht die vorangehend beschriebenen Anforderungen. Vielmehr handelt es sich bei diesen bekannten PUR-Schäumen überwiegend um solche, die für die Isolierung von Erdgas- und LN2-Lagertanks vorgesehen sind.

So sind in der FR 27 87 796 B1 ein Polyurethanschaum für die Kälteisolierung im extremen Tieftemperaturbereich und ein Verfahren zu dessen Herstellung beschrieben, bei dem ein Gemisch aus propoxyliertem/ethoxyliertem Sorbit, Pentaerythrit, Saccharose, Phthalsäureanhydrid und Bisphenol-A-Derivaten zusammen mit 4,4'-Diphenylmethandiisocyanat-Polymer in Gegenwart von Treibmitteln, Katalysatoren, Stabilisatoren und anderen Additiven zur Reaktion gebracht wird. Das Gemisch wird bei diesem bekannten Verfahren aus einer Mischung aus 20 bis 60 Gewichtsprozent propoxyliertem/ethoxyliertem Sorbit, 10 bis 40 Gewichtsprozent propoxyliertem/ethoxyliertem Pentaerythrit, 10 bis 20 Gewichtsprozent propoxylierter/ethoxylierter Saccharose, 10 bis 20 Gewichtsprozent propoxyliertem/ethoxyliertem Phthalsäureanhydrid und 10 bis 20 Gewichtsprozent propoxyliertem/ethoxyliertem Bisphenol A sowie einem 4,4'-Diphenylmethandiisocyanat-Polymer mit 2,7 bis 3,1 funktionellen Gruppen pro Molekül hergestellt und als Isolierung für Erdgas-Tanks empfohlen. Dieser bekannte Schaum ist zwar durch eine hohe Druckfestigkeit von etwa 0.8 MPa bei Raumtemperatur und eine Dichte von 90 kg/m3 charakterisiert, allerdings erscheint es fraglich, ob dieser bekannte Werkstoff die geforderte Beständigkeit gegenüber thermischen Zugspannungen auch bei Verwendung mit Flüssigwasserstoff aufweist, zumal hier explizit auf eine Verwendung mit Flüssig-Stickstoff verwiesen wird.

Ähnliches gilt für andere bereits bekannte Schäume. So sind auch in der KR 1020000010023 A PUR-Schäume beschrieben, die für die Isolierung von Erdgas- und LN2-Lagertanks vorgesehen sind. Bei einem weiteren, aus der JP 2000063477 A bekannten Schaum sind keine Angaben zu seinen physikalischen und mechanischen Eigenschaften verfügbar. Schließlich sind in der US 38 95 146 A lediglich allgemein ein Verfahren und eine Struktur für die thermische Isolierung von Tanks zur Lagerung von Flüssigkeiten bei tiefen Temperaturen beschrieben.

Aufgabe der Erfindung ist es, einen Polyurethanschaum der eingangs genannten Art bereitzustellen, der eine Verwendung des gemäß diesem Verfahren hergestellten Werkstoffs als Tieftemperatur-Innenisolierung von Tanks für den Transport und die Lagerung von Kryoflüssigkeiten ermöglicht, wobei sich bei diesen Flüssigkeiten hauptsächlich, aber nicht ausschließlich, um flüssigem Wasserstoff (LH2) handelt. Die makroskopischen Eigenschaften des nach diesem Verfahren hergestellten Polyurethanschaums sollen gleichzeitig die oben beschriebenen Anforderungen erfüllen. Insbesondere soll er eine hohe Beständigkeit gegenüber Verformungen aufweisen, die als Folge von thermischen Spannungen beim Befüllen des Tanks mit LH2 auftreten können, eine hohe Bruchdehnung unter Zugbeanspruchung, eine hohe Druckfestigkeit sowohl bei Umgebungstemperaturen als auch bei 77 K bei gleichzeitig möglichst geringer Dichte.

Die Erfindung löst diese Aufgabe dadurch, daß bei einem derartigen Polyurethanschaum der Anteil von Urethan, Ester und aromatischen Ringen in der Polymermatrix zwischen 70 und 85 Gewichtsprozent beträgt und daß das Molekulargewicht pro Verzweigungseinheit zwischen 500 und 700 liegt.

In vorteilhafter Weiterbildung des Verfahrens gemäß der Erfindung sind die folgenden Inhaltsstoffe vorgesehen:

- Polyether-Polyol, das durch Polyaddition von Propylenoxid und Ethylenoxid zu Sorbit oder Saccharose hergestellt wird;
- Kettenverlängerer, beispielsweise C4- bis C6-Alkandiole oder auch Diethylenglycol oder Dipropylenglycol oder ein N-substituiertes Diethanolamin, N-Methyldiethanolamin, N-Ethyldiethanolamin oder N-Phenyldiethanolamin;
- Polyester-Polyole mit aromatischer Struktur.

Hierbei erhöht die Einführung von Polyether-Polyolen die Druckfestigkeit, wohingegen die Verwendung von bifunktionellen Polyester-Polyolen hohe Bruchdehnungseigenschaften sicherstellt. Bei der bevorzugten Verfahren zur Herstellung des Polyurethanschaums nach der Erfindung wird ein Treibmittel mit einem Ozonabbaupotenzial (OAP) von Null verwendet und als Katalysatoren werden entweder tertiäre Amine allein oder als Gemisch mit einem Zinn-Katalysator benutzt.

Als Ergebnis läßt sich auf diese Weise ein Polyurethanschaum nach der Erfindung mit den folgenden Eigenschaften herstellen:

- eine Dichte im Bereich von 65 bis 110 kg/m3, vorzugsweise 70 bis 90 kg/m3;
- ein Verhältnis $\varepsilon 77/\Delta 1(296\text{-}77)$ senkrecht zur Schäumungsrichtung im Bereich von 3,5 bis 5,0 und
- eine Druckfestigkeit parallel zur Schäumungsrichtung im Bereich von 0,65 bis 0,90 MPa bei 296 Grad Kelvin und 1,5 bis 2,1 MPa bei 77 Grad Kelvin.

Zur inneren Isolierung von Tanks zur Lagerung von kryogenen Flüssigkeiten mittels eines derartigen Polyurethanschaumes wird dieser mittels Gieß- oder Sprühtechniken aufgebracht; wobei dieses Verfahren sowohl für die Isolierung von verstärkten als auch von nicht verstärkten ebenen oder gekrümmten Strukturen verwenden kann. Der Polyurethanschaum gemäß der Erfindung kann außerdem, beispielsweise aus Gründen von Reinheitsanforderungen, sowohl mit einer Tieftemperatur-Epoxid-Auskleidung als auch mit einer Grundierung auf Epoxidbasis zur Verbesserung der Haftfestigkeit kombiniert werden.

Die mit dem dem erfindungsgemäßen Polyurethanschaum erzielte Isolierung ist gegenüber thermischen Belastungen und Verformungen durch tiefe Temperaturen beständig und besitzt eine hohe Druckfestigkeit. Sie zeichnet sich durch die Kombination der nachfolgenden Merkmale aus:

- Die Isolierung kann auf der Innenwand von Tanks, die mit einer Kryoflüssigkeit benetzt wird, verwendet werden.

- Sie hat eine hohe Druckfestigkeit sowohl bei Raumtemperatur als auch im Tieftemperaturbereich bei verhältnismäßig geringer Dichte.

- Sie besitzt die von PU-Hartschäumen bekannten guten Isolationseigenschaften.

- Sie besitzt eine hohe Beständigkeit gegenüber thermischen Spannungen.

- Partikelförmige Verunreinigungen können durch eine zusätzliche Epoxid-Beschichtung reduziert werden.

- Die Isolierung kann sowohl auf verstärkte als auch auf nicht verstärkte Strukturen aufgetragen werden.

- Sie kann sowohl auf ebenen als auch gekrümmten Oberflächen aufgebracht werden.

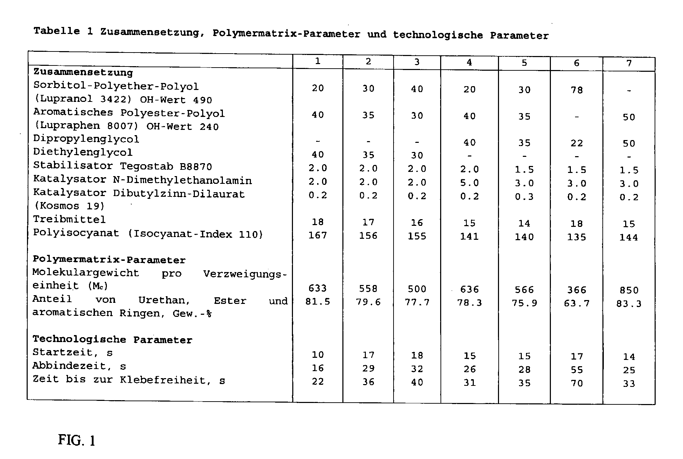

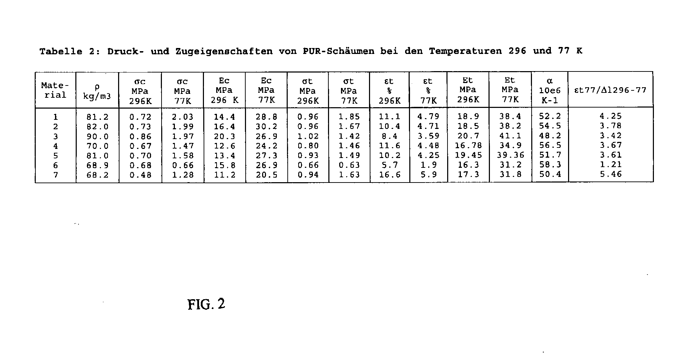

Nachfolgend soll die Herstellung von Polyurethanschäumen gemäß der Erfindung anhand von Beispielen näher erläutert werden. In Übereinstimmung mit der Erfindung sind dabei die Zusammensetzung, Polymermatrix-Parameter und technologische Parameter unterschiedlicher erfindungsgemäßer Polyurethanschäume in der Tabelle 1 (Fig. 1) zusammengefaßt, während Tabelle 2 (Fig. 2) die Druck- und Zugeigenschaften der in Tabelle 1 aufgeführten PUR-Schäume bei den Temperaturen 296 und 77 K angibt.

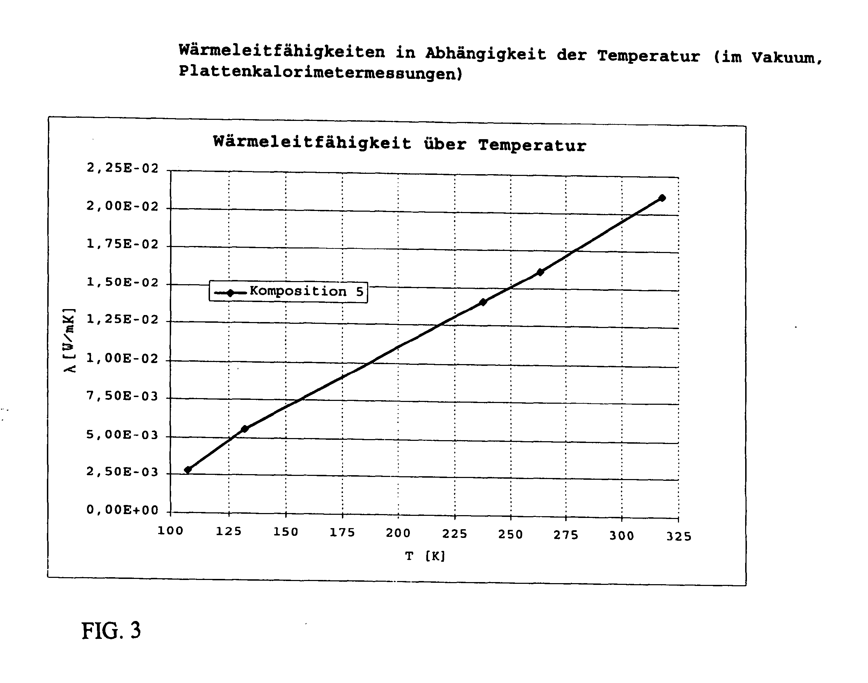

Fig. 3 zeigt erste gemessene Werte für die Wärmeleitfähigkeit gemäß Komposition 5 der Tabelle 1 und 2.

Anhand eines Beispiels 1 soll ferner die Herstellung einer typischen Polyurethanschaumstoff-Zusammensetzung beschrieben werden.

Beispiel 1

Komponente A

Sorbit-Polyether-Polyol
Aromatisches Polyester-Polyol
Diethylenglycol
Katalysatoren
Treibmittel

Komponente B

Polyisocyanat

Die Inhaltsstoffe der Komponente A wurden zunächst bei 2800 Umdrehungen pro Minute mit einem Rührer homogenisiert; anschließend wurde Polyisocyanat (Komponente B) hinzugegeben. Dieses Gemisch wurde für 7 Sek. homogenisiert und dann in eine tafelförmige Gießform gegossen. Bei dem so erhaltenen PUR-Schaum wurden folgende technologische Parameter gemessen: Startzeit 10 Sek., Abbindezeit 16 Sek. und Zeit bis zur Klebefreiheit 22 Sek. Es wurde ein PUR-Schaum mit feinporiger Struktur erhalten, dessen mechanische Eigenschaften in Tabelle 2 (Beispiel 1) beschrieben sind.

Um die Einhaltung der Anforderungen, die für eine Tieftemperatur-Innenisolierung von Lager- und Transporttanks erwogen werden, zu beschreiben, lassen sich zwei Kriterien für die Bewertung von PUR-Schäumen anführen. Dies ist zum einen die Fähigkeit der PUR-Schäume, bei Einwirkung von verformenden Einflüssen eine Rißbildung zu vermeiden, die in der Tieftemperatur-Isolierung von Tanks infolge thermischer Spannungen auftreten kann. Zum anderen ist dies eine hohe Druckfestigkeit der PUR-Schäume bei Umgebungstemperatur. Die Einhaltung des ersten Kriteriums durch die Isolierung aus PUR-Schaum, nämlich die Rißbildung durch verformende Kräfte infolge thermischer Spannungen im PUR-Schaum zu verhindern, kann läßt sich dabei durch das folgende Verhältnis beschreiben:

$$\varepsilon_{77} / \Delta l_{296\text{-}77} \qquad (1).$$

Darin ist

- $\varepsilon_{77}$ die Bruchdehnung des PUR-Schaumes (in Prozent) in senkrechter Schäumungsrichtung bei 77 K;
- $\Delta l_{296\text{-}77}$ die Kontraktion des PUR-Schaumes (in Prozent) in senkrechter Schäumungsrichtung beim Abkühlen von 296 K auf 77 K.

Das Verhältnis (1) gibt an, um welchen Faktor die Bruchdehnung des PUR-Schaumes bei 77 K größer ist als die Verformungen, die infolge der Kontraktion des PUR-Schaumes beim Abkühlen von 296 K auf 77 K auftreten. Je größer das Verhältnis gemäß (1) ist, desto größer ist die Wahrscheinlichkeit, daß es infolge thermischer Spannungen nicht zu einer Rißbildung im thermischen Isoliermaterial kommt. Um eine ausreichende Sicherheit der PUR-Schäume vor der Bildung von Rissen infolge thermischer Spannungen zu erreichen, sollte das Verhältnis $\varepsilon_{77}/\Delta l_{296\text{-}77}$ nicht kleiner als 3,0 sein. Eine Möglichkeit, solch einen Index-Wert zu erreichen ist es, PUR-Schäume mit einem hohen $\varepsilon_{77}$-Index herzustellen.

Es ist bekannt, daß die Spannungs-Dehnungs-Eigenschaften von PUR-Schäumen vor allem von ihren Polymermatrix-Parametern abhängen, d. h. vom Molekulargewicht pro Verzweigungseinheit (Mc) und vom Gehalt an Urethan, Ester und aromatischen Ringen. Der Bruchdehnungsindex $\varepsilon$ eines PUR-Schaumes hängt im Wesentlichen von seinem Polymermatrix-Wert Mc ab. Polymermatrix-Werte Mc für herkömmliche PUR-Hartschaumstoffe sind gewöhnlich im Bereich von 300 bis 500, während der Gehalt an Urethan, Ester und aromatischen Ringen in ihnen unter 70 Gewichtsprozent liegt. Im Zusammenhang mit dem Polyurethanschaum nach der Erfindung wurde jedoch gefunden:

- Bei einem hohen Anteil von Urethan, Ester und aromatischen Ringen in der Polymermatrix (70 bis 85 Gewichtsprozent) zeichnen sich PUR-Schäume mit höheren Mc-Werten von 500 bis 700 bei 77 K nicht nur durch eine hohe Bruchdehnung bei 77 K aus, sondern sie besitzen auch eine hohe Druckfestigkeit: Dies wird durch die Beispiele 1 bis 5 in der angefügten Tabelle 1 belegt.
- Bei Mc-Werten von 800 bis 900 haben PUR-Schäume ein hohes Verhältnis $\varepsilon_{77}/\Delta)296\text{-}77$, obwohl ihre Druckfestigkeit nicht hoch ist, belegt durch Beispiel 7 in Tabelle 1.
- PUR-Schäume mit einem Polymermatrix-Wert Mc von circa 360, wie sie in Beispiel 6 aufgeführt sind, haben nur bei Umgebungstemperatur eine hohe Druckfestigkeit, während ihr $\varepsilon_{77}$-Wert sehr niedrig ist, deshalb ist ihre Verwendung als Tieftemperatur-Innenisolierung von LH2-Tanks auszuschließen.

**Patentansprüche**

1. Polyurethanschaum zur thermalen Isolation bei Tiefsttemperaturen, hergestellt durch eine Reaktion von Polyisocyanat und Polyolen, die mindestens zwei aktive Wasserstoffatome enthalten, einem Kettenverlängerer, einem Treibmittel, einem Schaumstabilisator und Katalysatoren, **dadurch gekennzeichnet, daß** der Anteil von Urethan, Ester und aromatischen Ringen in der Polymermatrix des Polyurethanschaums zwischen 70 und 85 Gewichtsprozent beträgt und daß das Molekulargewicht pro Verzweigungseinheit zwischen 500 und 700 liegt.

2. Polyurethanschaum gemäß Anspruch 1, **dadurch gekennzeichnet, daß** die Polyolmischung folgendes umfaßt:

   a) 15 bis 45 Gewichtsprozent eines Kettenverlängerers mit der Funktionalität 2;
   b) 25 bis 45 Gewichtsprozent eines aromatischen Strukturpolyester-Polyols mit einem OH-Wert zwischen 200 und 280 mg KOH/g mit der Funktionalität 2.0,

   wobei die Summe der Komponenten aus a), b) und c) 100 Gewichtsprozent beträgt.

3. Polyurethanschaum gemäß Anspruch 1 oder 2, **dadurch gekennzeichnet, daß** der Kettenverlängerer aus C4- bis C6-Alkandiol, 1.4-Butandiol, 2.3-Butandiol, 1.5-Pentandiol oder 1.6-Hexandiol besteht.

4. Polyurethanschaum gemäß Anspruch 1 oder 2, **dadurch gekennzeichnet, daß** der Kettenverlängerer aus Diethylenglycol oder Dipropylenglycol besteht.

5. Polyurethanschaum gemäß Anspruch 1 oder 2, **dadurch gekennzeichnet, daß** der Kettenverlängerer ein N-substituiertes Diethanolamin: N-Methyldiethanolamin, N-Ethyldiethanolamin oder N-Phenyldiethanolamin ist.

6. Polyurethanschaum gemäß einem der Ansprüche 1 bis 5, **dadurch gekennzeichnet, daß** der OH-Wert zwischen 500 und 750 liegt.

7. Polyurethanschaum gemäß einem der Ansprüche 1 bis 6, **dadurch gekennzeichnet, daß** die Funktionalität des zugrundeliegenden Polyisocyanats zwischen 2.1 und 2.9 liegt.

8. Polyurethanschaum gemäß einem der Ansprüche 1 bis 7, **dadurch gekennzeichnet, daß** er in einem Gieß- oder Spritzverfahren hergestellt ist und seine Dichte im Bereich von 65 bis 110 kg/m3, vorzugsweise 70 bis 90 kg/m3 liegt, das Verhältnis $\varepsilon 77/\Delta l$ (296-77) der Bruchdehnung in senkrechter Schäumungsrichtung bei 77 K, $\varepsilon 77$, zur Kontraktion in senkrechter Schäumungsrichtung beim Abkühlen von 296 K auf 77 K, $\Delta l$(296-77), senkrecht zur Schäumungsrichtung im Bereich von 3,5 bis 5,0 liegt und daß seine Druckfestigkeit parallel zur Schäumungsrichtung im Bereich von 0,65 bis 0,90 MPa bei 296 Grad Kelvin und 1,5 bis 2,1 MPa bei 77 Grad Kelvin liegt.

9. Verwendung eines Polyurethanschaums gemäß Anspruch 8 zur inneren Isolierung von Tanks für die Lagerung von kryogenen Flüssigkeiten, insbesondere von flüssigem Wasserstoff (LH2), **dadurch gekennzeichnet, daß** dieser im Gieß- oder Spritzverfahren auf der Innenseite des Tanks aufgetragen wird.

Tabelle 1 Zusammensetzung, Polymermatrix-Parameter und technologische Parameter

| | 1 | 2 | 3 | 4 | 5 | 6 | 7 |
|---|---|---|---|---|---|---|---|
| **Zusammensetzung** | | | | | | | |
| Sorbitol-Polyether-Polyol (Lupranol 3422) OH-Wert 490 | 20 | 30 | 40 | 20 | 30 | 78 | - |
| Aromatisches Polyester-Polyol (Lupraphen 8007) OH-Wert 240 | 40 | 35 | 30 | 40 | 35 | - | 50 |
| Dipropylenglycol | - | - | - | 40 | 35 | 22 | 50 |
| Diethylenglycol | 40 | 35 | 30 | - | - | - | - |
| Stabilisator Tegostab B8870 | 2.0 | 2.0 | 2.0 | 2.0 | 1.5 | 1.5 | 1.5 |
| Katalysator N-Dimethylethanolamin | 2.0 | 2.0 | 2.0 | 5.0 | 3.0 | 3.0 | 3.0 |
| Katalysator Dibutylzinn-Dilaurat (Kosmos 19) | 0.2 | 0.2 | 0.2 | 0.2 | 0.3 | 0.2 | 0.2 |
| Treibmittel | 18 | 17 | 16 | 15 | 14 | 18 | 15 |
| Polyisocyanat (Isocyanat-Index 110) | 167 | 156 | 155 | 141 | 140 | 135 | 144 |
| | | | | | | | |
| **Polymermatrix-Parameter** | | | | | | | |
| Molekulargewicht pro Verzweigungs-einheit ($M_c$) | 633 | 558 | 500 | 636 | 566 | 366 | 850 |
| Anteil von Urethan, Ester und aromatischen Ringen, Gew.-% | 81.5 | 79.6 | 77.7 | 78.3 | 75.9 | 63.7 | 83.3 |
| | | | | | | | |
| **Technologische Parameter** | | | | | | | |
| Startzeit, s | 10 | 17 | 18 | 15 | 15 | 17 | 14 |
| Abbindezeit, s | 16 | 29 | 32 | 26 | 28 | 55 | 25 |
| Zeit bis zur Klebefreiheit, s | 22 | 36 | 40 | 31 | 35 | 70 | 33 |

FIG. 1

Tabelle 2: Druck- und Zugeigenschaften von PUR-Schäumen bei den Temperaturen 296 und 77 K

| Mate-rial | ρ kg/m3 | σc MPa 296K | σc MPa 77K | Ec MPa 296 K | Ec MPa 77K | σt MPa 296K | σt MPa 77K | εt % 296K | εt % 77K | Et MPa 296K | Et MPa 77K | α 10e6 K-1 | εt77/Δl296-77 |
|---|---|---|---|---|---|---|---|---|---|---|---|---|---|
| 1 | 81.2 | 0.72 | 2.03 | 14.4 | 28.8 | 0.96 | 1.85 | 11.1 | 4.79 | 18.9 | 38.4 | 52.2 | 4.25 |
| 2 | 82.0 | 0.73 | 1.99 | 16.4 | 30.2 | 0.96 | 1.67 | 10.4 | 4.71 | 18.5 | 38.2 | 54.5 | 3.78 |
| 3 | 90.0 | 0.86 | 1.97 | 20.3 | 26.9 | 1.02 | 1.42 | 8.4 | 3.59 | 20.7 | 41.1 | 48.2 | 3.42 |
| 4 | 70.0 | 0.67 | 1.47 | 12.6 | 24.2 | 0.80 | 1.46 | 11.6 | 4.48 | 16.78 | 34.9 | 56.5 | 3.67 |
| 5 | 81.0 | 0.70 | 1.58 | 13.4 | 27.3 | 0.93 | 1.49 | 10.2 | 4.25 | 19.45 | 39.36 | 51.7 | 3.61 |
| 6 | 68.9 | 0.68 | 0.66 | 15.8 | 26.9 | 0.66 | 0.63 | 5.7 | 1.9 | 16.3 | 31.2 | 58.3 | 1.21 |
| 7 | 68.2 | 0.48 | 1.28 | 11.2 | 20.5 | 0.94 | 1.63 | 16.6 | 5.9 | 17.3 | 31.8 | 50.4 | 5.46 |

FIG. 2

Wärmeleitfähigkeiten in Abhängigkeit der Temperatur (im Vakuum, Plattenkalorimetermessungen)

Wärmeleitfähigkeit über Temperatur

FIG. 3

EP 2 236 537 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2787796 B1
- KR 1020000010023 A
- JP 2000063477 A
- US 3895146 A